# EUROPEAN PATENT SPECIFICATION

(11) **EP 1 622 310 B1**
(45) Date of publication and mention of the grant of the patent: **12.09.2007**
(21) Application number: 05254501.9
(22) Date of filing: 20.07.2005
(51) Int. Cl.: H04L 12/26

(54) **Administration method and system for network management systems**
Verwaltungsverfahren und -system für Netzverwaltungssysteme
Procédé et système de gestion pour des systèmes de gestion de réseau

(30) Priority: 27.07.2004 US 899841
(43) Date of publication of application: 01.02.2006
(73) Proprietor: Lucent Technologies, Inc., Murray Hill, New Jersey 07974-0636 (US)
(72) Inventor: Yu, Jian, 90425 Nuremberg (DE)
(74) Representative: Sarup, David Alexander

(56) References cited:
- EP-A- 1 039 685
- US-A- 6 148 335
- US-A1- 2002 174 207

## Description

### FIELD OF THE INVENTION

The invention relates to the field of network management systems and, more specifically, the monitoring of the status of numerous management system servers.

### BACKGROUND OF THE INVENTION

In many network management systems, such as the Telecommunication Management Network Model of Operations Support Systems, the management of different system functions is typically performed by separate management systems. For instance, fault management functions such as alarm handling, trouble detection and the like are typically handled by a dedicated fault management system, while configuration management functions such as system turn-up, network provisioning and the like are typically handled by a separate configuration management system. In order to ensure a high availability of these systems to the users, the health of these management systems themselves must be monitored and managed on a regular basis.

In order to monitor the server status of each of the management system servers, an administrator must typically access each management system individually. While this approach is feasible for a small number of management systems, as the complexity of telecommunications networks grows, and particularly for large service providers, the number of management systems that must be accessed can increase significantly. This can make monitoring of the management system servers very difficult. Furthermore, systems that currently monitor the running status of multiple servers do so by retrieving the status information remotely, a process that can significantly delay the time it takes for a user to ascertain the critical details of the status of one or more servers. This is especially true for the case in which the user must initiate a large number of server status request messages, or initiates a single server status request to a large number of servers.

This approach limits the user to obtaining only the most recent server status information.

In general, U.S. Patent Application Publication 2002/0174207 A1, by Battou, discloses a self-healing hierarchical management system in which a plurality of network management systems (NMSs), each responsible for managing network elements located in different portions of a communication network, are logically arranged in a tree structure. As taught in U.S. Patent Application Publication 2002/0174207 A1, NMSs higher in the hierarchy manage each of the network portions managed by NMSs lower in the hierarchy. As taught in U.S. Patent Application Publication 2002/0174207 A1, NMSs are further organized into sub-groups, and NMSs within each sub-group monitor the status of one another in order to detect failures of NMSs. In response to a failure, one of the active NMSs in the sub-group assumes responsibility for monitoring network element in the portion of the network previously monitored by the failed NMS.

In general, European Patent Application No. EP 1 039 685 A2, by Borsato et al., discloses a method and apparatus for managing IP addressing in a network and synchronizing communication between a central database and one or more servers. As taught in European Patent Application No. EP 1 039 685 A2, a server manager is coupled between the central database and the at least one server, and communicates configuration information between the central database and the at least one server in a single communication channel. The server manager synchronizes requests for configuration information and configuration updates from the one or more servers and transmits the requests and updates to the central database.

In general, U.S. Patent Application No. 6,148,335, by Haggard et al., discloses a method of monitoring a computer network by collecting resource data from a plurality of network nodes, analyzing the resource data to generate historical performance data, and reporting the historical performance data to another network node. The network nodes are servers operating on different platforms. The resource data is gathered using separate programs having different application programming interfaces for the respective platforms.

### SUMMARY OF THE INVENTION

A method and apparatus according to the present invention are set out in the independent claims, to which the reader is now referred. Preferred features are laid out in the dependent claims.

The invention comprises a method and apparatus for receiving, storing and using status information concerning the running status of a plurality of management systems. Specifically, a method according to one embodiment comprises the steps of receiving the management system status information from a plurality of management systems within a network of management systems where each of said management systems is operable for performing operations support system functions for a communication network, storing said system status information in a database and using the aggregated system status information from said database to respond to requests from one or more users.

In one embodiment of the invention, an administration system is equipped with an alert system for notifying one or more users to the occurrence of a predefined event or the crossing of a predefined threshold. In this embodiment, the event and threshold parameters and the values of those parameters, as well as the type, format, content, and distribution list of the notification, are configurable.

### BRIEF DESCRIPTION OF THE DRAWINGS

The teachings of the present invention can be readily understood by considering the following detailed description in conjunction with the accompanying drawings, in which:
FIG. 1 depicts a high level block diagram of a telecommunications management system architecture;
FIG. 2 depicts a high level block diagram of an administration system suitable for use in receiving, storing and using the server status information of the management system servers of FIG. 1; and
FIG. 3 depicts a flow diagram of a method according to the present invention.

To facilitate understanding, identical reference numerals have been used, where possible, to designate identical elements that are common to the figures.

### DETAILED DESCRIPTION OF THE INVENTION

The invention is discussed in the context of a telecommunications network environment with multiple management systems; however, the methodology of the invention can readily be applied to other industries and/or network topologies that use multiple management systems. The invention allows one or more users to monitor the status of multiple management systems from a single administration system, where the management system server status information (and/or other information) is continuously received, stored in a database associated with the administration system and accessed by one or more users of the administration system. This arrangement eliminates the need for a user to access each management system individually in order to ascertain the current running status of that system, and provides the user with aggregate server status history information for each of the management systems being monitored.

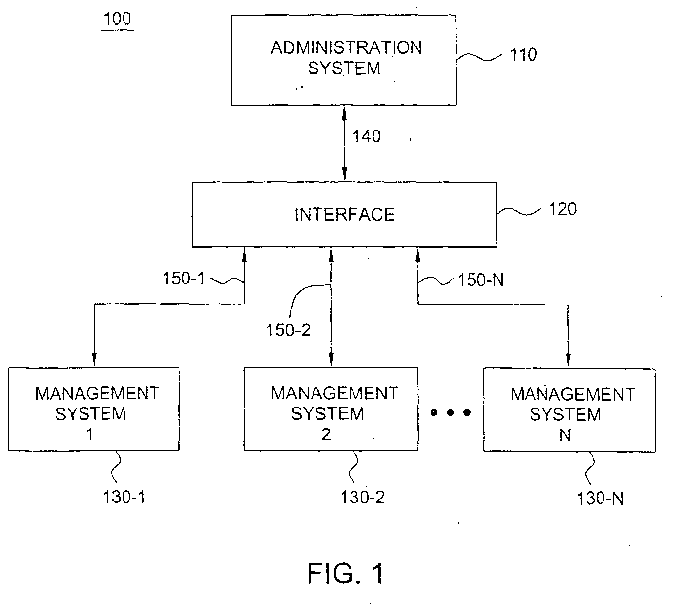

FIG. 1 depicts a high level block diagram of a telecommunications management system architecture including the present invention. Specifically, the communications management system architecture 100 of FIG. 1 comprises an administration system 110, a server status information relay interface 120 (hereinafter interface 120), and a plurality of management systems 130-1 through 130-N (collectively management systems 130). In that the management systems 130 act as servers, the terms management systems 130 and management systems servers are used interchangeably.

The administration system 110 communicates with the interface120 via a communication link 140. In turn, the interface 120 communicates with the management systems 130 via a plurality of communication links 150-1 through 150-N (collectively communication links 150). It will be appreciated by those skilled in the art that communication link 140 and communication links 150 may be implemented using any suitable method of communication between network elements.

Each of the management systems 130 manages one or more systems or network elements (not shown). Some management systems common in the telecommunications industry include configuration management systems, performance management systems, fault management systems, security management systems and accounting management systems. The interface 120, illustratively an open interface that is vendor/protocol independent, facilitates communication between the administration system 110 and management systems 130.

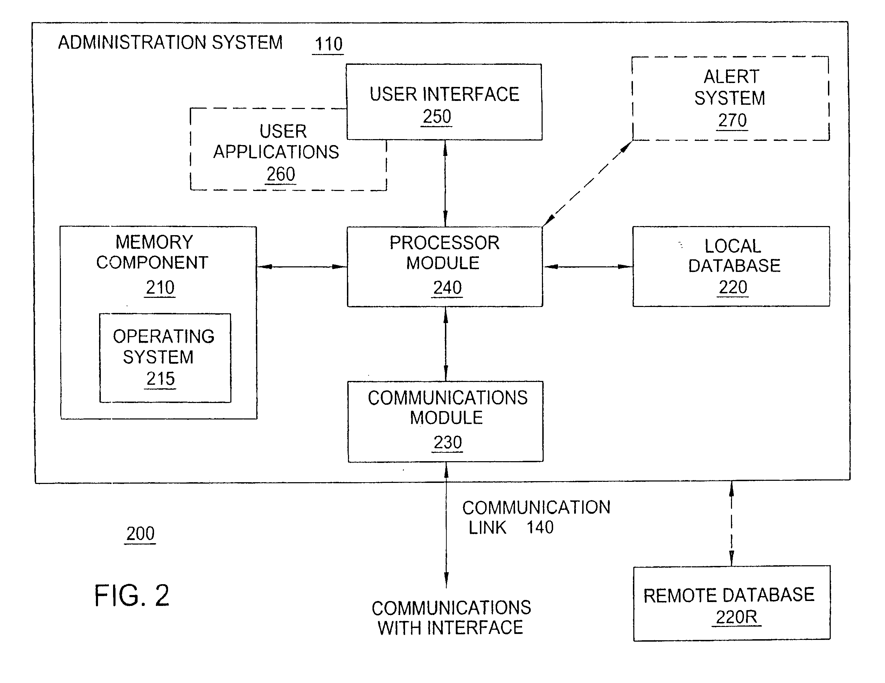

FIG. 2 depicts a high level block diagram of an exemplary administration system suitable for use as the administration system 110 depicted above with respect to FIG. 1. Specifically, administration system 110 of FIG. 2 comprises a memory component 210, a local database 220, a communication module 230, a processor module 240 and a user interface 250. As shown in FIG. 2, administration system 110 may optionally include one or more user applications 260-1 through 260-N (collectively user applications 260). As shown in FIG. 2, the administration system 110 may also optionally include an alert system 270.

The memory component 210 may be any memory component suitable for supporting the various functions described herein, such as an operating system 215. The operating system 215 may be any operating system suitable for supporting the functions described herein, such as the Windows® and/or Linux operating systems.

The local database 220 may be any database suitable for supporting the functions described herein. The local database 220 is coupled to the processor module 240 for the purposes of storing and retrieving information. In another embodiment, a remote database 220R communicates with the administration system 110 in support of the functions described herein.

The processor module 240 is coupled to the memory component 210, communications module 230 and the user interface 250, and is responsible for communications and message processing within the administration system 110. This includes processing "server status information collection" request messages initiated by the administration system 110, processing response messages received by the communications module 230 via the interface 120, processing the server status and other information received from management system servers 130 and processing requests for display of information to the user interface 250.

The collection of server status information from each of the management system servers is accomplished by at least one of a plurality of collection methods. In one embodiment, the transfer of information is initiated by an agent on a management system server. In this embodiment, the specifics of the transfer, such as the frequency, format and content of the information to be transferred is determined by the specific transferring management system servers. The administration system 110 is configured to receive and process the information, such as server status information, sent or transferred from the management system servers via the interface 120.

In another embodiment, the transfer of information is initiated in response to a request from the administration system 110. In this embodiment, the request comprises at least one of an on-demand request that is received from a user via the user interface 250 and an automated request initiated by the administration system 110 based upon a predefined set of parameters. The specifics of the transfer, such as frequency, format and content are configured on the administration system 110 via input received from the user interface 250. The individual management systems are configured to receive and process the requests sent by the administration system 110.

The server status and other information returned from the management system servers via the interface 120 is received by the communications module 230. The information is passed to processor module 240, which processes the information for storage in the local database 220. Optionally, the information is transmitted to the user interface 250 for display to the user.

The processor module 240 processes and analyzes the server status and other information. In general, the processor module 240 processes the server status and other information according to the type of information received. One type of information is the essentially static server status information of the management systems 130, such as the total number of management system servers 130 being monitored, the types of management system servers 130 being managed, and the like.

Another type of information is the dynamic server status information of the management system servers 130, such as server availability status, server network connectivity status, server software installation status, server processor status, server disk usage status, server configured user status and server system log information. In one embodiment, this dynamic server status information is adaptable for use in calculating at least one server quality measurement associated with each of the management system servers 130.

In one embodiment, in which the administration system 110 is monitoring a multi-vendor environment, the processor module 240 uses the server status and other information to identify the root cause of interface problems between management systems 130 being monitored by the administration system 110.

As mentioned above, the user interface 250 is coupled to the memory component 210, the local database 220 and the communications module 230 through the processor module 240. The user interface 250 is utilized by at least one administration system user to access the server status information. The source and scope of server status information displayed to the user is specified via the user interface 250.

The user accesses real-time server status information directly from the management systems 130, or accesses aggregate server status information and/or other information from the local database 220. Where the server status information is retrieved from management systems 130 in real time, the request initiated via the user interface 250 is processed by the processor module 240. The processor module 240 formulates the request and passes a retrieval message to the communications module 230 for transmission toward the specified management system server(s) via the interface 120. The processor module 240 then processes the response message(s) received by communications module 230, stores the returned server information in local database 220 and, optionally, displays the result to the user via the user interface 250.

The user may access the server status information/parameters for an individual management system server, a group of management system servers and all management system servers. The user may access server status information for a single server status parameter, multiple server status parameters and all server status parameters. As described hereinabove, server status parameters include, for example, server availability status, server network connectivity status, server software installation status, server processor status, server disk usage status, server configured user status and server system log information. More or fewer parameters may be used.

In the embodiment of FIG. 2, the user interface 250 is a graphical user interface; however, a command-line interface may also be used. In one embodiment in which the user interface 250 is a graphical user interface, each management system that is being monitored by administration system 110 is represented as a node that is accessed by a user via a point-and-click operation. Such an action returns all information available for a specified server, or a subset of the available information. The action taken to display the information to the user, and the format and scope of the information displayed, depends upon the type and design of the user interface 250.

Optional user applications 260 are accessed via the user interface 250. The user applications 260 may be utilized by a user to retrieve the aggregate server status information from local database 220 and to perform management system monitoring and/or management functions. Other functions may be performed.

The optional alert system 270 is accessed via the user interface 250, and provides a user with the capability to define one or more events and threshold parameters associated with the monitoring of the management systems servers 130. Some events that may be defined include a loss of connectivity between the administration system 110 and one or more of the management system servers 130, the failover of one or more of the management system servers 130 to corresponding backup servers, and the like.

One such server status threshold parameter, sever status availability, comprises a specific length of time during which the administration system 110 does not receive a valid response from a management system server. In this embodiment, the threshold parameter value is, illustratively, a length of time (60 seconds for example) which, when exceeded, triggers a predefined action. Other parameters and associated parameter values may also be defined for server network connectivity status, server software installation status, server processor status, server disk usage status, server configured user status, server system log information, and the like.

The user may also define the action (or actions) to be triggered when a specified event occurs or a threshold parameter value is crossed. Such action(s) include, for example, displaying an alert to the user via the user interface 250, transmitting an alert towards a user via a predefined communication medium triggering an external notification to predefined recipients via a predefined medium (such as email, pager, cell phone), and the like, either singly or in combination. The alert system 270 optionally accesses the local database 220 to retrieve data useful in determining whether or not an event has occurred, or whether a threshold parameter value has been crossed.

In one embodiment, not all alert system capabilities described above are configurable from the user interface 250. Some alert system capabilities, including the definitions of event and threshold parameters (and associated parameter values), as well as the details of the notifications that are triggered, are implemented via software that is not accessible to the end user.

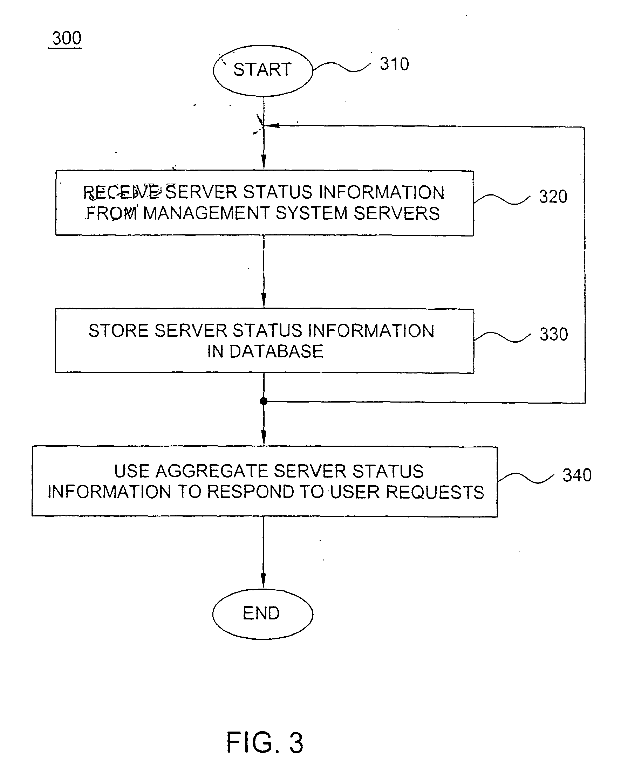

FIG. 3 depicts a flow diagram of a method according to the invention. Specifically, FIG. 3 depicts a flow diagram of a method 300 for receiving, storing, and using the server status information from a plurality of management system servers.

The method 300 of FIG. 3 is entered at step 310 and proceeds to step 320 where the server status information is received from one or more of said plurality of management system servers 130 via interface 120. As previously described, there are several techniques for causing the transfer of the management system status information to the administration system 110, including a manual retrieval initiated from the user interface 250, an automated retrieval initiated based upon a predefined schedule, a transmittal initiated by one or more of the management system servers 130 themselves, and the like.

At step 330, the server status information received by the administration system 110 during step 320 is stored in the local database 220 of administration system 110. As the steps in method 300 are continually executed over a period of time, the aggregate server status information stored in local database 220 defines thereby a server status history.

At step 340, the server status information stored in local database 220 is used by administration system 110 to respond to user requests for server status information initiated via the user interface 250.

Since retrieval of management system server status information may be initiated in a variety of ways as described hereinabove, step 320 and step 330 may be executed multiple times and/or in any order prior to the execution of step 340 by a user.

The management system server status information stored in local database 220 and retrieved by the user via the user interface 250 includes any desired information that may be obtained from the management systems 130. Such information includes server availability status, server network connectivity status, server software installation status, server processor status, server disk usage status, server configured user status, server system log information, and the like.

Additional software may be required in order to expand the set of server status and other information that is available from the management system servers 130, and to analyze the server status and other information retrieved from the management system servers 130. Similarly, additional software may be required in order to support the optional user applications 260 and the optional alert system 270.

For purposes of clarity by example, the present invention has been described with respect to administration system 110 having the local database 220. As used herein, the term "database" is meant to encompass at least one of the local database 220 and the remote database 220R. Those skilled in the art will appreciate that the present invention may be implemented using at least one of the local database 220 and the remote database 220R.

The above-described invention advantageously aggregates server status information in order to provide one or more users with a centralized view of the status of a plurality of management system servers. Moreover, by aggregating server status information over time, the invention provides management system server status history information.

Although various embodiments which incorporate the teachings of the present invention have been shown and described in detail herein, those skilled in the art can readily devise many other varied embodiments that still incorporate these teachings, within the scope of the appended claims.

## Claims

1. A method, comprising:
receiving (320) system status information concerning the running status of each of a plurality of management systems (130) within a network of management systems (100), each of said management systems (130) operable for performing operations support system functions for a communication network;
storing (330) said system status information in a database (220, 220R); and
using (340) said stored system status information to respond to user requests.

2. The method of claim 1, further comprising the step of transmitting toward said plurality of management systems (130) a request for said system status information.

3. The method of claim 1, wherein said system status information comprises static system status information and dynamic system status information.

4. The method of claim 3, wherein said dynamic system status information is adaptable for use in calculating at least one system quality measurement associated with each of said management systems (130).

5. The method of claim 1, wherein said system status information comprises at least one of system availability status, system network connectivity status, system software installation status, system processor status, system disk usage status, system configured user status and system log information.

6. The method of claim 1, further comprising the step of transmitting an alert towards a user in response to at least one of an occurrence of an event and a crossing of a threshold parameter.

7. An apparatus, comprising;
a communications module (230) for receiving system status information concerning the running status of each of a plurality of management systems (130) within a network of management systems (100), each of said management systems (130) operable for performing operations support system functions for a communication network;
a database (220, 220R) for storing said system status information;
a user interface (250) for accessing said system status information; and
a processor module (240) in communication with said communications module (230), said database (220, 220R) and said user interface (250), said processor module responding to user requests according to said system status information stored in said database (220, 220R).

8. The apparatus of claim 7, wherein said system status information comprises static system status information and dynamic system status information.

9. The apparatus of claim 8, wherein said dynamic system status information is adaptable for use in calculating at least one server quality measurement associated with each of said management systems.

10. The apparatus of claim 7, wherein said system status information comprises at least one of system availability status, system network connectivity status, system software installation status, system processor status, system disk usage status, system configured user status and system log information.

11. The apparatus of claim 7, further comprising an alert system (270) operably coupled to said user interface (250) and said database (220, 220R) via said processor module (240), wherein said alert system (270) is configurable to monitor at least one event and at least one threshold parameter.

## Patentansprüche

1. Verfahren mit den folgenden Schritten:
Empfangen (320) von Systemstatusinformationen bezüglich des Ablaufstatus jedes von mehreren Verwaltungssystemen (130) in einem Netz von Verwaltungssystemen (100), wobei jedes der Verwaltungssysteme (130) dafür ausgelegt ist, Betriebshilfesystemfunktionen für ein Kommunikationsnetz auszuführen;
Speichern (330) der Systemstatusinformationen in einer Datenbank (220, 220R); und
Verwenden (340) der gespeicherten Systemstatusinformationen, um auf Benutzeranforderungen zu reagieren.

2. Verfahren nach Anspruch 1, ferner mit dem Schritt des Sendens einer Anforderung der Systemstatusinformationen zu den mehreren Verwaltungssystemen (130).

3. Verfahren nach Anspruch 1, wobei die Systemstatusinformationen statische Systemstatusinformationen und dynamische Systemstatusinformationen umfassen.

4. Verfahren nach Anspruch 3, wobei die dynamischen Systemstatusinformationen für die Verwendung bei der Berechnung mindestens einer mit jedem der Verwaltungssysteme (130) assoziierten Systemqualitätsmessung anpaßbar sind.

5. Verfahren nach Anspruch 1, wobei die Systemstatusinformationen Systemverfügbarkeitsstatus-, Systemnetzkonnektivitätsstatus-, Systemsoftwareinstallationsstatus-, Systemprozessorstatus-, Systemplattennutzungsstatus-, systemkonfigurierte Benutzerstatus- und/oder Systemprotokollierungsinformationen umfassen.

6. Verfahren nach Anspruch 1, ferner mit dem Schritt des Sendens einer Warnung zu einem Benutzer als Reaktion auf das Auftreten eines Ereignisses und/oder auf ein Überschreiten eines Schwellenparameters.

7. Vorrichtung, umfassend:
ein Kommunikationsmodul (230) zum Empfangen von Systemstatusinformationen bezüglich des Ablaufstatus jedes von mehreren Verwaltungssystemen (130) in einem Netz von Verwaltungssystemen (100), wobei jedes der Verwaltungssysteme (130) dafür ausgelegt ist, Betriebshilfesystemfunktionen für ein Kommunikationsnetz auszuführen;
eine Datenbank (220, 220R) zum Speichern der Systemstatusinformationen;
eine Benutzeroberfläche (250) zum Zugreifen auf die Systemstatusinformationen; und
ein Prozessormodul (240), das mit dem Kommunikationsmodul (230), der Datenbank (220, 220R) und der Benutzeroberfläche (250) kommuniziert, wobei das Prozessormodul auf Benutzeranforderungen gemäß den in der Datenbank (220, 220R) gespeicherten Systemstatusinformationen reagiert.

8. Vorrichtung nach Anspruch 7, wobei die Systemstatusinformationen statische Systemstatusinformationen und dynamische Systemstatusinformationen umfassen.

9. Vorrichtung nach Anspruch 8, wobei die dynamischen Systemstatusinformationen für die Verwendung bei der Berechnung mindestens einer mit jedem der Verwaltungssysteme assoziierten Serverqualitätsmessung anpaßbar sind.

10. Vorrichtung nach Anspruch 7, wobei die Systemstatusinformationen Systemverfügbarkeitsstatus-, Systemnetzkonnektivitätsstatus-, Systemsoftwareinstallationsstatus-, Systemprozessorstatus-, Systemplattennutzungsstatus-, systemkonfigurierte Benutzerstatus- und/oder Systemprotokollierungsinformationen umfassen.

11. Vorrichtung nach Anspruch 7, ferner mit einem Warnungssystem (270), das über das Prozessormodul (240) wirksam mit der Benutzeroberfläche (250) und der Datenbank (220, 220R) gekoppelt ist, wobei das Warnungssystem (270) dafür auslegbar ist, mindestens ein Ereignis und mindestens einen Schwellenparameter zu überwachen.

## Revendications

1. Procédé, comprenant :
- la réception (320) d'informations d'état de système concernant l'état d'exécution de chacun d'une pluralité de systèmes de gestion (130) dans un réseau de systèmes de gestion (100), chacun desdits systèmes de gestion (130) étant opérationnel pour réaliser des fonctions de système de support d'exploitation pour un réseau de communication ;
- le stockage (330) desdites informations d'état de système dans une base de données (220, 220R) ; et
- l'utilisation (340) desdites informations d'état de système stockées pour répondre à des demandes d'utilisateurs.

2. Procédé selon la revendication 1, comprenant en outre l'étape de transmission vers ladite pluralité de systèmes de gestion (130) d'une demande pour lesdites informations d'état de système.

3. Procédé selon la revendication 1, dans lequel lesdites informations d'état de système comprennent des informations d'état de système statiques et des informations d'état de système dynamiques.

4. Procédé selon la revendication 3, dans lequel lesdites informations d'état de système dynamiques sont adaptables pour une utilisation dans le calcul d'au moins une mesure de qualité de système associée à chacun desdits systèmes de gestion (130).

5. Procédé selon la revendication 1, dans lequel lesdites informations d'état de système comprennent au moins un parmi un état de disponibilité de système, un état de connectivité de réseau de système, un état d'installation de logiciels de système, un état de processeur de système, un état d'utilisation de disques de système, un état d'utilisateur configuré par le système et des informations d'archivage de système.

6. Procédé selon la revendication 1, comprenant en outre l'étape de transmission d'une alerte vers un utilisateur en réponse à au moins un parmi une occurrence d'un événement et un franchissement d'un paramètre de seuil.

7. Appareil, comprenant :
- un module de communication (230) pour recevoir des informations d'état de système concernant l'état d'exécution de chacun d'une pluralité de systèmes de gestion (130) dans un réseau de systèmes de gestion (100), chacun desdits systèmes de gestion (130) étant opérationnel pour réaliser des fonctions de système de support d'exploitation pour un réseau de communication ;
- une base de données (220, 220R) pour stocker lesdites informations d'état de système ;
- une interface utilisateur (250) pour accéder auxdites informations d'état de système ; et
- un module de processeur (240) en communication avec ledit module de communication (230), ladite base de données (220, 220R) et ladite interface utilisateur (250), ledit module de processeur répondant à des demandes d'utilisateurs selon lesdites informations d'état de système stockées dans ladite base de données (220, 220R).

8. Appareil selon la revendication 7, dans lequel lesdites informations d'état de système comprennent des informations d'état de système statiques et des informations d'état de système dynamiques.

9. Appareil selon la revendication 8, dans lequel lesdites informations d'état de système dynamiques sont adaptables pour une utilisation dans le calcul d'au moins une mesure de qualité de serveur associée à chacun desdits systèmes de gestion.

10. Appareil selon la revendication 7, dans lequel lesdites informations d'état de système comprennent au moins un parmi un état de disponibilité de système, un état de connectivité de réseau de système, un état d'installation de logiciels de système, un état de processeur de système, un état d'utilisation de disques de système, un état d'utilisateur configuré par le système et des informations d'archivage de système.

11. Appareil selon la revendication 7, comprenant en outre un système d'alerte (270) couplé de manière opérationnelle à ladite interface utilisateur (250) et ladite base de données (220, 220R) par l'intermédiaire dudit module de processeur (240), dans lequel ledit système d'alerte (270) est configurable pour surveiller au moins un événement et au moins un paramètre de seuil.
